# EUROPÄISCHE PATENTSCHRIFT

(11) **EP 0 403 037 B1**
(45) Veröffentlichungstag und Bekanntmachung des Hinweises auf die Patenterteilung: **31.03.1993**
(21) Anmeldenummer: 90250133.7
(22) Anmeldetag: 23.05.1990
(51) Int. Cl.: F16L 13/14, F16L 41/02, F16L 47/00

(54) **Verpressbarer Fitting**
Compression fitting
Fitting de compressibilité

(30) Priorität: 12.06.1989 DE 3919496
(43) Veröffentlichungstag der Anmeldung: 19.12.1990
(73) Patentinhaber: MANNESMANN Aktiengesellschaft, 40027 Düsseldorf (DE)
(72) Erfinder: Unewisse, Heinz, D-4330 Mülheim/Ruhr (DE)
(74) Vertreter: Meissner, Peter E., Dipl.-Ing.

(56) Entgegenhaltungen:
- DE-A- 2 362 926
- DE-A- 2 719 882
- DE-A- 3 729 180
- DE-A- 3 809 479

## Beschreibung

Die Erfindung betrifft einen verpreßbaren Fitting zur Herstellung einer unlösbaren, dichten Verbindung von Rohren.

Das Preßfitting-System für die Hausinstallation aus C-Stahl oder hochlegiertem Stahl ist bekannt (siehe Prospekt der Mannesmann Edelstahlrohr GmbH bzw DE-A-2719882). Kernstück dieses Systems ist ein aus einem Rohrabschnitt hergestellter verformbarer Preßfitting, der je nach Ausbildung als Bogen oder T-Stück oder Reduzierstück mindestens ein hakenförmig und wulstartig ausgebildetes, einen Dichtring aufnehmendes Ende aufweist und daran sich ein in Längsrichtung erstreckender zylindrisch ausgebildeter Bereich anschließt. Am Ende der Erstreckung dieses zylindrischen Bereiches ist eine radial nach innen sich erstreckende sickenförmige Vertiefung angebracht, die als Anschlag für das einschiebbare glattendige Rohr dient. Mittels einer Betätigungsvorrichtung die mit einer gelenkig angeordneten Backen aufweisenden Haltevorrichtung verbunden ist, wird das wulstartige Ende plastisch und der eingeschlossene Dichtring elastisch verformt. Zusätzlich wird mit dem gleichen Preßvorgang im zylindrischer Bereich des Fittings in unmittelbarer Nähe des wulstartigen Endes eine sickenförmige Vertiefung angepreßt, die auch das darunterliegende eingeschobene Rohr mit erfaßt. Der elastisch verformte Dichtring übernimmt bei diesem Verbindungssystem die Dichtfunktion, während die angepreßte sickenförmige Vertiefung die durch den Innendruck entstehenden Längskräfte aufnimmt.

Nachteilig bei diesem System ist, daß der Preßfitting wegen der hohen Anforderung bezüglich der Oberfläche und der Abmessungstoleranzen aus einem Abschnitt eines speziell hergestellten Rohres unter Anwendung mehrerer Umformschritte gewonnen wird. Das Ausgangsrohr ist üblicherweise ein nahtloses oder längsnahtgeschweißtes Rohr, das nach der Kaltverformung einer Wärmebehandlung unterzogen wird. Dieses speziell hergestellte Rohr weist enge Toleranzen und eine hohe Oberflächengüte auf. Um von diesem Rohr ein Preßfitting herzustellen, wird das Ausgangsrohr in Abschnitte zerteilt und durch Anwendung mehrerer Umformschritte, z. B. Einziehen, Bördeln, Drücken, die gewünschte endgültige Querschnittsform erzeugt. Da das Ausgangsprodukt schon relativ hochwertig ist, ist auch der daraus hergestellte Preßfitting relativ teuer.

Aufgabe der Erfindung ist es, einen verpreßbaren Fitting zu schaffen, der unter Beibehaltung der bekannten schnellen Verbindungstechnik kostengünstiger herstellbar ist.

Diese Aufgabe wird durch die Merkmale des Anspruches 1 angegebene Mittel gelöst. Vorzugsweise Ausgestaltungen ergeben sich aus den Unteransprüchen.

Der Vorteil des vorgeschlagenen verpreßbaren Fittings ist darin zu sehen, daß der den Typ des Fittings charakterisierende Bereich, (Grundkörper) z. B. Bogen, T-Abzweig, reduzierender Übergang, aus einem metallischen oder nichtmetallischen Werkstoff gegossen oder gepreßt und der so hergestellte Grundkörper mit einem standardisierten Anschlußstück fest verbunden wird. Im Sinne einer möglichst kostengünstigen Lösung wird weiterbildend vorgeschlagen, den Grundkörper aus einfachem oder höherwertigem Grauguß herzustellen. Eine andere Möglichkeit besteht darin, einen verpreßbaren Kunststoff mit oder ohne verstärkende Fasereinlage für die Herstellung des Grundkörpers zu verwenden. Das standardisierte Anschlußstück weist wie der bereits bekannte Preßfitting ein wulstartig ausgebildetes, einen Runddichtring aufnehmendes Ende und einen dazu anschließenden zylindrisch ausgebildeten Bereich auf, der am Ende mit einer als Anschlag für das einschiebbare glattendige Rohr wirkenden sickenförmigen Vertiefung versehen ist. Die Verbindung zwischen Grundkörper und Anschlußstück erfolgt je nach Werkstoffpaarung durch Löten oder Schweißen oder durch Verkleben in der Weise, daß die Bohrung des Anschlußstückes glattbündig in die Bohrung des Grundkörpers übergeht. Dadurch wird verhindert, daß durch Wirbelbildungen an der Verbindungsstelle unzulässig hohe Strömungsverluste entstehen.
* (d.h. einer Verringerung des lichten Innendurchmessers)

Da unabhängig vom Typ des Fittings die Anschlußstücke standardisiert sind, ergeben sich für gleiche Nennabmessungen entsprechend hohe Stückzahlen, die die Kosten weiter senken. Da auch die Grundkörper als Massenprodukt erheblich billiger sind als ein entsprechendes Rohrelement, werden die Mehrkosten für die Verbindung von Grundkörper und Anschlußstück bzw. Anschlußstücken mehr als kompensiert. Ein weiterer Vorteil ergibt sich dadurch, daß das Anschlußstück durch Stanzen und Tiefziehen auch aus einem ebenen Blech herstellbar ist und die Rohrherstellung als Ausgangsprodukt für den Fitting entfallen kann.

Damit die mit steigenden Innendrücken in Axialrichtung wirkenden Kräfte sicher aufgenommen werden können, wird weiterbildend vorgeschlagen, zusätzlich zu der den einen Dichtring enthaltenen Bereich des Anschlußstückes auch Abschnitte des sich anschließenden zylindrischen Bereiches mit dem eingeschobenen Rohr zu verpressen, um damit die mechanische Verklammerung zu verbessern.

Der vorgeschlagene verpreßbare Fitting ist vorzugsweise geeignet für die Verbindung von handelsüblichen Leitungsrohren im Abmessungsbereich von 10 bis 100 mm mit Innendrücken je nach Nennweite bis zu 100 bar, wobei auch noch größere Nennweiten mit diesem Verbindungssystem beherrschbar sind.

In der Zeichnung wird anhand zweier Ausführungsbeispiele der erfindungsgemäße verpreßbare Fitting näher erläutert.

Es zeigen:
- Figur 1: hälftig eine Draufsicht und hälftig einen Längsschnitt durch einen erfindungsgemäßen verpreßbaren Fitting
- Figur 2: wie Fig. 1, jedoch eine andere Ausführungsform

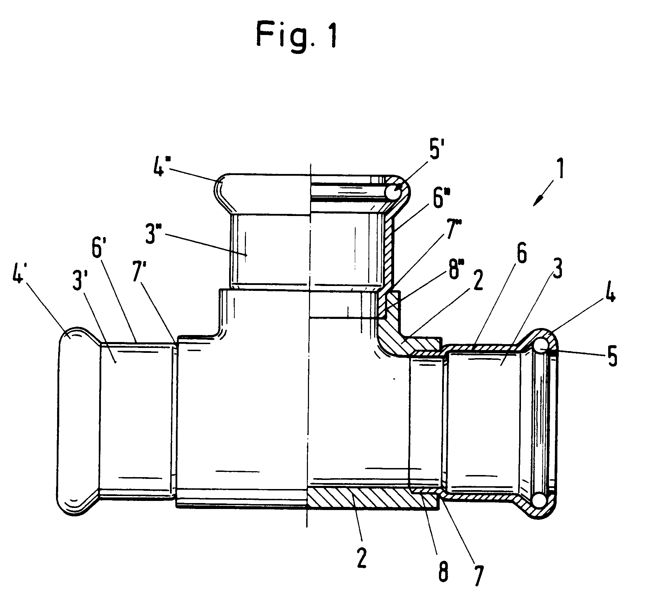

Figur 1 zeigt auf der linken Bildhälfte eine Draufsicht und auf der rechten Bildhälfte einen Längsschnitt durch einen erfindungsgemäßen verpreßbaren Fitting, der in diesem Ausführungsbeispiel als T-Stück 1 mit gleicher Abmessungsnennweite für den Abgang wie für das Durchgangsrohr ausgebildet ist. Der den Typ des Fittings charakterisierende Bereich, (Grundkörper 2) d. h. in diesem Falle der T-Abzweig ist beispielsweise ein Gußteil, das in diesem Ausführungsbeispiel mit drei gleich ausgebildeten standardisierten Anschlußstücken 3,3′,3˝ fest verbunden ist.

Im Falle eines T-Stückes 1 mit reduziertem Abgang wäre das mit dem Abgang verbundene Anschlußstück 3˝ in seinen Abmessungen verschieden von denen 3,3′, die mit dem Durchgangsrohr verbunden sind.

Das standardisierte Anschlußstück 3,3′,3˝ weist wie der bereits bekannte Preßfitting ein wulstartig ausgebildetes Ende 4,4′,4˝ auf, in dessen Hohlraum ein Runddichtring 5,5˝ angeordnet ist. An diesem Ende 4,4′,4˝ schließt ein zylindrisch ausgebildeter Bereich 6,6′,6˝ an, der am Ende mit einer als Anschlag für das einschiebbare glattendige Rohr (hier nicht dargestellt) wirkenden sickenförmigen Vertiefung 7,7′,7˝ versehen ist. Die Vertiefung 7,7′,7˝ geht über in eine muffenartige Verlängerung 8,8˝, die in eine entsprechende Ausdrehung des Grundkörpers 2 einschiebbar ist. Das in den Grundkörper 2 eingeschobene Anschlußstück 3,3′,3˝ wird beispielsweise mit dem Grundkörper 2 verlötet. Diese Art der Verbindungstechnik wird man vorzugsweise bei einem aus Kohlenstoffstahl angefertigten Anschlußstück 3,3′,3˝ anwenden. Es könnte ebenso gut auch eine hochfeste Klebeverbindung sein.

Die muffenartige Verlängerung 8,8˝ ist mit ihren Maßen so auf die Maße der Ausdrehung des Grundkörpers 2 abgestimmt, daß innen eine glattbündige Verbindung entsteht. Die Verpreßung des Anschlußstückes 3,3′,3˝ mit dem hier nicht dargestellten Rohr erfolgt in der bereits bekannten Weise mittels eines angesetzten, hier ebenfalls nicht dargestellten Preßwerkzeuges. Bei der Verpressung wird der Durchmesser des wulstartig ausgebildeten Endes 4,4′,4˝ verringert und der Hohlraum in dem wulstartigen Ende 4,4′,4˝ so verkleinert, daß der eingeschlossene Runddichtring 5,5˝ elastisch verformt und damit die Dichtwirkung erzielt wird.

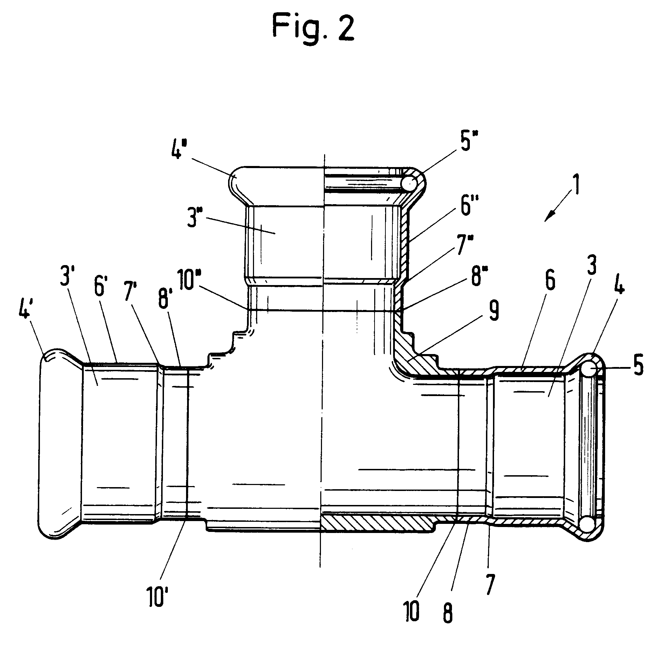

Figur 2 zeigt dieselbe Draufsicht und den gleichen Längsschnitt eines anderen Ausführungsbeispieles für den erfindungsgemäßen verpreßbaren Fitting. Dabei wurden für gleiche Teile die gleichen Kennzeichen verwendet. Der Unterschied zu Figur 1 besteht darin, daß die standardisierten Anschlußstücke 3,3′,3˝ mit dem etwas anders geformten Grundkörper 9 über eine Schweißnaht 10,10′,10˝ miteinander verbunden sind. Diese Art der Verbindung wird man vorzugsweise für aus Edelstahl gefertigte Anschlußstücke 3,3′,3˝ anwenden. Auch bei dieser Art der Verbindung wird dafür gesorgt, daß an der Verbindungsstelle ein glattbündiger innerer Übergang entsteht. Die andere Art der Verbindung bringt es mit sich, daß die äußeren Abmaße des T-Stückes etwas größer sind im Vergleich zu dem in Figur 1 dargestellten Ausführungsbeispiel.

## Patentansprüche

1. Verpreßbarer Fitting (1) zur Herstellung einer unlösbaren, dichten Verbindung von Rohren mit einem den Typ des Fittings (1) charakterisierenden Bereich, der als ein aus einem metallischen oder nichtmetallischen Werkstoff hergestellter gegossener oder gepreßter Grundkörper (2,9) ausgebildet und mit einem aus Blech hergestellten standardisierten Anschlußstück (3,3′,3˝) fest verbunden ist, wobei dieses Anschlußstück (3,3′,3˝) ein hakenförmig und wulstartig ausgebildetes, einen Runddichtring (5,5˝) aufnehmendes Ende (4,4′,4˝) und einen daran anschließenden zylindrisch ausgebildeten Bereich (6,6′,6˝) aufweist und am Ende mit einer als Anschlag für das einschiebbar glattendige Rohr wirkenden sickenförmigen Vertiefung (7,7′,7˝) versehen ist.

2. Verpreßbarer Fitting nach Anspruch 1,
**dadurch gekennzeichnet,**
daß die Verbindung von Grundkörper (2) und Anschlußstück (3,3′,3˝) eine Lötnaht aufweist.

3. Verpreßbarer Fitting nach Anspruch 1,
dadurch gekennzeichnet,
daß die Verbindung von Grundkörper (9) und Anschlußstück (3,3′,3˝) eine Schweißnaht (10,10′,10˝) aufweist.

4. Verpreßbarer Fitting nach Anspruch 1,
dadurch gekennzeichnet,
daß Grundkörper (2,9) und Anschlußstück (3,3′,3˝) miteinander verklebt sind.

5. Verpreßbarer Fitting nach einem der Ansprpüche 1 bis 4,
dadurch gekennzeichnet,
daß das Anschlußstück (3,3′,3˝) aus einem ebenen Blechabschnitt hergestellt wird.

6. Verpreßbarer Fitting nach einem der Ansprüche 1 bis 4,
dadurch gekennzeichnet,
daß das Anschlußstück (3,3′,3˝) aus einem glatten Rohrabschnitt hergestellt wird.

7. Verpreßbarer Fitting nach einem der Ansprüche 1 bis 6,
dadurch gekennzeichnet,
daß zusätzlich auch Abschnitte des an das wulstartig ausgebildete Ende (4,4′,4˝) sich anschließenden zylindrischen Bereiches (6,6′,6˝) mit dem Rohr verpreßt wird.

8. Verpreßbarer Fitting nach einem der Ansprüche 1 bis 7,
dadurch gekennzeichnet,
daß im Bereich der Verbindungsstelle die Bohrung des Anschlußstückes (3,3′,3˝) glattbündig in die Bohrung des Grundkörpers (2,9) übergeht.

9. Verpreßbarer Fitting nach einem der Ansprüche 1 bis 8,
dadurch gekennzeichnet,
daß der Grundkörper (2, 9) ein Graugußteil ist.

10. Verpreßbarer Fitting nach einem der Ansprüche 1 bis 8,
dadurch gekennzeichnet,
daß der Grundkörper (2, 9) ein Preßteil aus Kunststoff ist.

11. Verpreßbarer Fitting nach Anspruch 10,
dadurch gekennzeichnet,
daß das Preßteil mit Fasern verstärkt ist.

## Claims

1. A compression fitting (1) for producing a non-detachable, hermetic connection of pipes with a region characterising the type of the fitting (1), which region is designed as a cast or pressed basic body (2, 9) produced from a metallic or non-metallic material and is connected securely to a standardised connection piece (3, 3′, 3′) made from sheet metal, said connection piece (3, 3′, 3˝) having a hook-shaped and bead-shaped end (4, 4′, 4˝) which receives a round sealing ring (5, 5˝) and a cylindrical region (6, 6′, 6˝) adjoining thereon and is provided on the end with a crimped recess (7, 7′, 7˝) which acts as a stop for the insertable smooth-ended pipe.

2. A compression fitting according to Claim 1, characterised in that the connection of the basic body (2) and connection piece (3, 3′, 3˝) has a soldered seam.

3. A compression fitting according to Claim 1, characterised in that the connection of the basic body (9) and the connection piece (3, 3′, 3˝) has a welded seam (10, 10′, 10˝).

4. A compression fitting according to Claim 1, characterised in that the basic body (2, 9) and the connection piece (3, 3′, 3˝) are glued together.

5. A compression fitting according to one of Claims 1 to 4, characterised in that the connection piece (3, 3′, 3˝) is produced from a flat section of sheet metal.

6. A compression fitting according to one of Claims 1 to 4, characterised in that the connection piece (3, 3′, 3˝) is made from a smooth pipe section.

7. A compression fitting according to one of Claims 1 to 6, characterised in that additionally sections of the cylindrical region (6, 6′, 6˝) which adjoins the bead-shaped end (4, 4′, 4˝) are pressed with the pipe.

8. A compression fitting according to one of Claims 1 to 7, characterised in that the bore in the connection piece (3, 3′, 3˝) merges with a thin collar into the bore of the basic body (2, 9) in the region of the connection point.

9. A compression fitting according to one of Claims 1 to 8, characterised in that the basic body (2, 9) is a grey cast iron part.

10. A compression fitting according to one of Claims 1 to 8, characterised in that the basic body (2, 9) is a pressed part made of plastic.

11. A compression fitting according to Claim 10, characterised in that the pressed part is reinforced with fibres.

## Revendications

1. Raccord compressible (1) pour fabriquer une liaison étanche indétachable de tubes, comportant une zone caractérisant le type du raccord (1), qui est réalisée en tant que corps de base (2,9), coulé ou pressé, fabriqué à partir d'une matière métallique ou non métallique, et est solidaire d'une pièce de raccordement (3,3′,3˝) standardisée, fabriquée à partir de tôle, cette pièce de raccordement (3,3′,3˝) présentant une extrémité (4,4′,4˝), réalisée en forme de crochet et en formant un bourrelet, recevant une bague d'étanchéité annulaire (5,5′), et une zone (6,6′,6˝) cylindrique s'y raccordant, et étant munie, à son extrémité, d'un décrochement (7,7′,7˝) en forme de moulure jouant le rôle de butée pour le tube à extrémité lisse qui peut y être inséré.

2. Raccord compressible selon la revendication 1, caractérisé en ce que la liaison entre le corps de base (2) et la pièce de raccordement (3,3′,3˝) présente une brasure.

3. Raccord compressible selon la revendication 1, caractérisé en ce que la liaison entre le corps de base (9) et la pièce de raccordement (3,3′,3˝) présente un joint de soudure (10,10′,10˝).

4. Raccord compressible selon la revendication 1, caractérisé en ce que le corps de base (2,9) et la pièce de raccordement (3,3′,3˝) sont collés ensemble.

5. Raccord compressible selon une des revendications 1 à 4, caractérisé en ce que la pièce de raccordement (3,3′,3˝) est fabriquée à partir d'un tronçon de tôle plan.

6. Raccord compressible selon une des revendications 1 à 4, caractérisé en ce que la pièce de raccordement (3,3′,3˝) est fabriquée à partir d'un tronçon de tube lisse.

7. Raccord compressible selon une des revendications 1 à 6, caractérisé en ce que des tronçons supplémentaires de la zone cylindrique se raccordant à l'extrémité (4,4′,4˝) réalisée en formant un bourrelet sont pressés sur le tube.

8. Raccord compressible selon une des revendications 1 à 7, caractérisé en ce que, dans la zone de l'endroit de liaison, le perçage de la pièce de raccordement (3,3′,3˝) se prolonge sans discontinuité dans le perçage du corps de base (2,9).

9. Raccord compressible selon une des revendications 1 à 8, caractérisé en ce que le corps de base (2,9) est une pièce de fonte grise.

10. Raccord compressible selon une des revendications 1 à 8, caractérisé en ce que le corps de base (2,9) est une pièce pressée en matière synthétique.

11. Raccord compressible selon la revendication 10, caractérisé en ce que la pièce pressée est renforcée de fibres.
